# EUROPÄISCHE PATENTSCHRIFT

(11) **EP 1 005 663 B1**
(45) Veröffentlichungstag und Bekanntmachung des Hinweises auf die Patenterteilung: **10.10.2001**
(21) Anmeldenummer: 98924034.6
(22) Anmeldetag: 21.03.1998
(51) Int. Cl.: G02B 6/30, G02B 6/36, G02B 6/42

(54) **VERFAHREN ZUR HERSTELLUNG EINES INTEGRIERT-OPTISCHEN WELLENLEITERBAUTEILS UND EINER STECKVERBINDUNG**
METHOD FOR PRODUCING AN OPTICAL COMPONENT INTEGRATED IN THE WAVEGUIDE CHIP WITH PLUG-IN CONNECTOR
PROCEDE DE PRODUCTION D'UN COMPOSANT OPTIQUE INTEGRE A LA PUCE A GUIDES D'ONDES AVEC CONNECTEUR ENFICHABLE

(30) Priorität: 19.08.1997 DE 19735683
(43) Veröffentlichungstag der Anmeldung: 07.06.2000
(73) Patentinhaber: Harting Elektro-optische Bauteile GmbH & Co. KG., 31162 Bad Salzdetfurth (DE)
(72) Erfinder: KRAGL, Hans, D-31199 Diekholzen (DE)
(74) Vertreter: Sties, Jochen, Dipl.-Ing.
(86) Internationale Anmeldenummer: DE9800832
(87) Internationale Veröffentlichungsnummer: WO9909441

(56) Entgegenhaltungen:
- EP-A- 0 682 276
- DE-A- 4 217 553
- MULLER C ET AL: "POLYMERE KOMPONENTEN FUR DIE MIKROOPTIK UND INTEGRIERTE OPTICK POLYMER COMPONENTS FOR MICROOPTICS AND INTEGRATED OPTICS" TECHNISCHES MESSEN TM, Bd. 60, Nr. 9, 1.September 1993, Seiten 330-338, XP000395495
- LINDER C ET AL: "FERTIGUNGSVERFAHREN FUR DIE MIKROSYSTEMTECHNIK MANUFACTURING TECHNOLOGIES FOR MICROSYSTEMS" TECHNISCHES MESSEN TM, Bd. 60, Nr. 9, 1.September 1993, Seiten 319-328, XP000395494

## Beschreibung

### Stand der Technik

Die Erfindung geht aus von einem Verfahren zur Herstellung eines integriert-optischen Wellenleiterbauteils mit einer Steckverbindung nach der Gattung des Hauptanspruchs.

Aus der unveröffentlichten deutschen Patentanmeldung mit dem Aktenzeichen 197 25 471.3 ist ein integriert-optisches Wellenleiterbauteil mit Faserankopplungen bekannt. Es weist ein Substrat aus polymerem Material auf, welches im Wesentlichen quaderförmig aufgebaut ist. An den äußeren Enden des Substrats sind V-nutförmige Faserankopplungsbereiche vorgesehen. Im Mittelbereich des Substrats ist eine mit höherbrechenden Material befüllte Wellenleitervertiefung vorgesehen, welche die V-nutförmigen Faserankoppelbereiche verbindet. In den Grenzbereichen zwischen den V-nutförmigen Faserankopplungsbereichen und der Wellenleitervertiefung befinden sich Vertiefungen mit rechteckigem Querschnitt, welche in etwa senkrecht zu den V-nutförmigen Faserankopplungsbereichen verlaufen.

Nach dem Stand der Technik wird das Substrat durch zweimaliges Abformen eines Masters hergestellt. Die erste Abformung des Masters erfolgt hierbei durch galvanische Beschichtung beispielsweise mit Nickel, die zweite Abformung durch eine Kunststoffabformtechnik, beispielsweise Heißpressen, Gießen, insbesondere Spritzguß oder Reaktionsguß.

Das integriert-optische Bauteil wird hergestellt, indem ein optisch transparenter Kleber auf das Substrat aufgebracht wird, und daraufhin ein Strip-off-Deckel auf das Substrat aufgedrückt wird. Der Strip-off-Deckel weist im Bereich der V-Nuten eine dachfirstartige Erhöhung auf, welche exakt in die V-nutförmigen Faserankoppelbereiche einrastet. Darüber hinaus weist er eine Erhebung mit rechteckigem Querschnitt auf, welche in die Vertiefungen mit rechteckigem Querschnitt des Substrats einrastet. Durch den Druck wird der Kleber aus dem Bereich zwischen Substrat und Deckelbauteil ausgetrieben und verbleibt nur in der Wellenleitervertiefung, wo er nach Aushärtung einen Wellenleiter bildet.

Das Masterbauteil wird aus einkristallinem Silizium hergestellt, wobei die V-nutförmigen Faserankoppelbereiche durch anisotropes Ätzen, beispielsweise in Kaliumhydroxid, erzeugt werden, die Wellenleitervertiefung wird durch Ätzen mit reaktiven Ionen (RIE, Reactive Ion Etching) hergestellt, die Vertiefungen mit rechteckigem Querschnitt werden beispielsweise durch Sägeschnitte einer Wafersäge realisiert.

Der Strip-off-Deckel wird durch einmalige galvanische Abformung eines Master-Deckels hergestellt, welcher ebenfalls aus Silizium besteht und ebenso hergestellt wurde wie das Masterbauteil für das Substrat. Insbesondere ist der Abstand zwischen den Sägeschnitten auf den beiden Masterbauteilen genau gleich.

Um das integriert optische Wellenleiterbauteil mit einer optischen Faser zu verbinden, kann die Faser in die V-nutförmigen Faserankoppelbereiche eingelegt werden, und festgeklebt werden. Hierzu ist es notwendig, die Faser aktiv so vorzujustieren, daß sie anschließend in die vorbestimmte V-Nut gedrückt wird. Darüber hinaus ist die so geschaffene Verbindung zwischen dem integriert optischen Wellenleiterbauteil und der Faser nicht mehr lösbar.

Eine andere aus der DE 4217553 A bekannte Methode zum Einkoppeln von Licht besteht darin, Fasern in ein Präzisionssteckerteil einzulegen, so daß sie an einem Ende des Steckerteils überstehen. Stecker und integriert optisches Wellenleiterbauteil werden dann so angeordnet, daß das aus dem Stecker herausragende Faserende in die V-nutförmigen Faserankoppelbereiche hineinragt. Die Vorjustierung der Fasern findet nun im Steckerbauteil statt, ist jedoch aufwendig und kostspielig.

Bei beiden aufgeführten Verfahren wird die Faser in ein relativ weiches Material, einen Kunststoff, eingedrückt. Bei hohem Anpreßdruck gibt das Material nach und verringert so entscheidend die Justierpräzision.

### Vorteile der Erfindung

Die erfindungsgemäßen Verfahren werden in den Ansprüchen 1,2,9 und 10 definiert. Die damit erzeugte Anordnung hat den Vorteil, daß ein sehr paßgenauer Stecker sehr preiswert herstellbar ist. Die niedrigen Kosten des Herstellungsverfahrens beruhen einerseits darauf, daß nur Kosten zur Herstellung eines einzigen Masters entstehen. Dadurch, daß Steckverbindung und Substrat Abformungen des selben Masters, jedoch in unterschiedlicher Generation, darstellen, ergibt sich eine inhärent hohe Paßgenauigkeit der Teile. Da die Faser automatisch richtig justiert wird, ergeben sich weitere Einsparungen durch den verringerten Arbeitsaufwand bei der Herstellung des integriert optischen Wellenleiterbauteils mit Steckverbindung. Durch die in den abhängigen Ansprüchen aufgeführten Maßnahmen sind vorteilhafte Weiterbildungen und Verbesserungen des im unabhängigen Anspruch angegebenen Verfahrens möglich. Durch dreimaliges Abformen des Masterbauteils mittels Galvanik ergibt sich eine vorteilhafte Kombination aus möglichst wenig Abformschritten einerseits und möglichst guter Ausnutzung des Masters andererseits.

Es ist besonders vorteilhaft, kleine Magnete in die Steckverbindung und das Substrat mit einzugießen, da dieser Magnet einerseits die Faser während des Eingießens fixiert, und andererseits im fertigen Bauteil das Heranführen der Steckverbindung an das Substrat erleichtert und Substrat und Steckverbindung nach dem Zusammenstecken aneinanderhält. Die Magnete erlauben, auf eine mechanische Arretierung zur verzichten, welche verschleißempfindlich und leicht zu beschädigen ist. Darüber hinaus kann durch Auswahl der Magnete die Stärke der Verbindung eingestellt werden, ohne neue Master oder Tochterstrukturen produzieren zu müssen.

Weiterhin ist es vorteilhaft, im Master weitere Mikrostrukturen vorzusehen, um somit die Positioniergenauigkeit der Steckverbindung zu erhöhen.

### Zeichnung

Ein Ausführungsbeispiel der Erfindung ist in der Zeichnung dargestellt und in der nachfolgenden Beschreibung näher erläutert. Es zeigen Figur 1 ein integriert optisches Wellenleiterbauelement nach dem Stand der Technik, Figur 2 ein weiteres integriert optisches Wellenleiterbauteil mit Steckverbindung nach dem Stand der Technik, Figuren 3 bis 9 ein Verfahren zur Herstellung eines integriert optischen Wellenleiterbauteils und einer Steckverbindung.

### Beschreibung

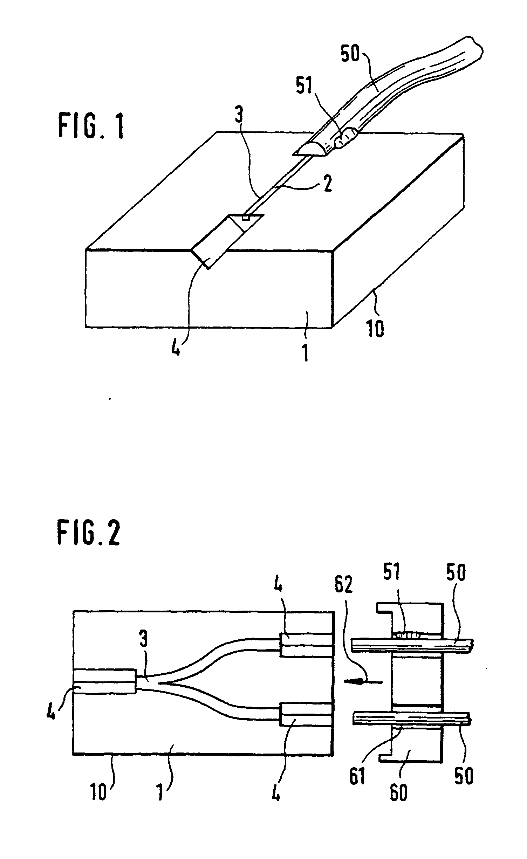

In Figur 1 ist ein erstes integriert optisches Wellenleiterbauelement 10 gezeigt. Das integriert optische Wellenleiterbauelement 10 besteht aus einem im wesentlichen guaderförmigen Substrat 1, welches aus einem Polymerwerkstoff besteht. Den äußeren Enden des Substrats 1 sind Faserankopplungsbereiche vorgesehen, welche als V-Nuten 4 ausgebildet sind. Im Mittelbereich des Substrats ist eine Wellenleitervertiefung 3 vorgesehen, welche die V-Nuten verbindet. Die Wellenleitervertiefung ist eine Vertiefung mit in etwa rechteckigem Querschnitt, die mit Wellenleitermaterial 2 gefüllt ist. In eine der beiden V-Nuten 4 ist eine Faser 50 eingelegt und mit Kleber 51 fixiert. Die Faser ist so angeordnet, daß ihre Längsachse in etwa mit der Längsachse der Wellenleitervertiefung 3 fluchtet.

In Figur 2 ist ein weiteres integriert optisches Wellenleiterbauteil 10 dargestellt, welches aus einem Substrat 1 besteht, welches wiederum im wesentlichen quaderförmig ist. An einer der beiden Stirnseiten befinden sich zwei V-Nuten 4, an der gegenüberliegenden Stirnseite befindet sich eine V-Nut 4. Die einzelne V-Nut ist über eine sich verzweigende Wellenleitervertiefung 3 mit den beiden gegenüberliegenden und einander benachbarten V-Nuten 4 verbunden. Weiterhin in Figur 2 dargestellt ist eine Steckverbindung 60, welche zwei als durchgängige V-Nuten ausgebildete Faserjustierungsbereiche 61 aufweist. In jeden der beiden Faserjustierungsbereiche 61 ist eine Faser 50 eingelegt, etwa dergestalt, daß sie auf eine Seite um ein Stück über die Steckverbindung 60 hinausragen, welches genauso groß ist, wie die Längsausdehnung der V-Nuten 4. Beide Fasern 50 sind mit Kleber 51 in den Faserjustierungsbereichen 61 der Steckverbindung 60 fixiert.

Zwischen der Steckverbindung 60 und dem Substrat 1 kann nun eine Verbindung hergestellt werden, indem die Steckverbindung 60 in Richtung der Aufsteckrichtung 62 bewegt wird, bis die Fasern 50 mit ihren über die Eckverbindung 60 hinausragenden Enden in den V-Nuten 4 des Substrats 1 liegen. Durch entgegengesetzte Bewegungen kann diese Verbindung wieder gelöst werden.

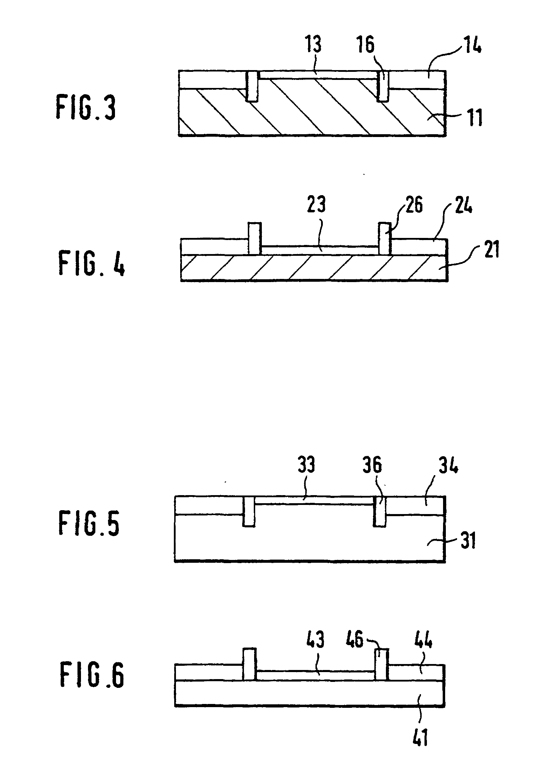

Anhand der Figuren 3 bis 9 soll das erfindungsgemäße Verfahren zur Herstellung eines integriert optische Wellenleiterbauteils erläutert werden.

In Figur 3 ist der Querschnitt durch ein Master 11 gezeigt. Das Master 11 besteht beispielsweise aus einem anisotrop ätzbaren Halbleiter, wie zum Beispiel Silizium. Die Grundform des Masters 11 ist ähnlich der Grundform des Substrats 1 auf Figur 1. An den äußeren gegenüberliegenden Enden des Masters 11 sind je eine erste Mikrostruktur 14 angebracht, welche in etwa die gleiche Form und Abmessung wie die V-Nuten 4 des Substrats 1 haben. Zwischen den beiden ersten Mikrostrukturen 14 verläuft eine zweite Mikrostruktur 13, welche in etwa die Form der Wellenleitervertiefung des Substrats 1 hat. Weiterhin ist in dem Master 11 eine dritte Mikrostruktur 16 vorgesehen, welche einen ebenfalls in etwa rechteckigen Querschnitt aufweist, jedoch tiefer ist als die zweite Mikrostruktur 13 und die erste Mikrostruktur 14. Die dritte Mikrostruktur 16 verläuft in etwa senkrecht zur Längsachse der zweiten Mikrostruktur 13 und der ersten Mikrostruktur 14. Die dritte Mikrostruktur 16 ist so angeordnet, daß die zweite Mikrostruktur 13 und die erste Mikrostruktur 14 die dritte Mikrostruktur 16 berührt.

Die erste Mikrostruktur 14 mit ihrem dreieckigen Querschnitt kann beispielsweise durch anisotropes Ätzen des Siliziummaterials des Masters 11 durch eine geeignete Maske erzeugt werden. Die zweite Mikrostruktur 13 wird beispielsweise durch reaktives Ionenätzen durch eine geeignete Maske erzeugt. Die dritte Mikrostruktur 16 kann beispielsweise durch Ansägen des Siliziums erzeugt werden.

In einem nächsten Verfahrensschritt wird eine Negativform vom Master 11 hergestellt. Das Produkt dieses Verfahrensschritts ist in Figur 4 dargestellt. Das Herstellen der Negativform geschieht dadurch, daß das Master 11 mit einer dicken Metallschicht, beispielsweise aus Nickel, elektrolytisch beschichtet wird. Nachdem die Beschichtung eine kritische Dicke erreicht hat, wird die Beschichtung vom Master 11 getrennt, wobei das Master 11 verloren geht. Gegebenenfalls wird die nicht strukturierte Seite der Beschichtung geglättet, um durch den Elektrolyseprozeß bedingte Rauhigkeiten und Welligkeiten durch die Schichtabtrennung zu beseitigen. Die abgelöste Beschichtung bildet die Negativform und wird auch 1.-Generation-Tochter 21 genannt. Die 1.-Generation-Tochter 21 verfügt über 1.-Tochter-Mikrostrukturen 23, 2.-Tochter-Mikrostrukturen 24 und 3.-Tochter-Mikrostrukturen 26, welche der zweiten Mikrostruktur 13, den ersten Mikrostrukturen 14 und den dritten Mikrostrukturen 16 invers entsprechen.

In der weiteren Beschreibung wird die folgende Bezeichnungsweise gewählt: Die galvanisch abgeformten Bauteile werden als n.-Generation-Tochter bezeichnet, wobei n die Zahl der Abformschritte darstellt. Die einzelnen Mikrostrukturen werden als Tochter-, Enkel-, Urenkel-, usw. Mikrostrukturen bezeichnet, wobei die vorgesetzte Ordnungszahl klarstellt, welche Mikrostruktur des Masters abgeformt wurde. So wird beipielsweise durch Abformung des Masters mit einer ersten Mikrostruktur und einer zweiten Mikrostruktur durch zweimaliges Abformen eine 2.-Generation Tochter mit einer 1. Enkel-Mikrostruktur und einer 2. Enkel-Mikrostruktur erzeugt.

Da beim Trennen von Master 11 und 1.-Generation-Tochter 21 das Master zerstört wird, existiert von einem Master in der Regel nur eine erste 1.-Generation-Tochter 21.

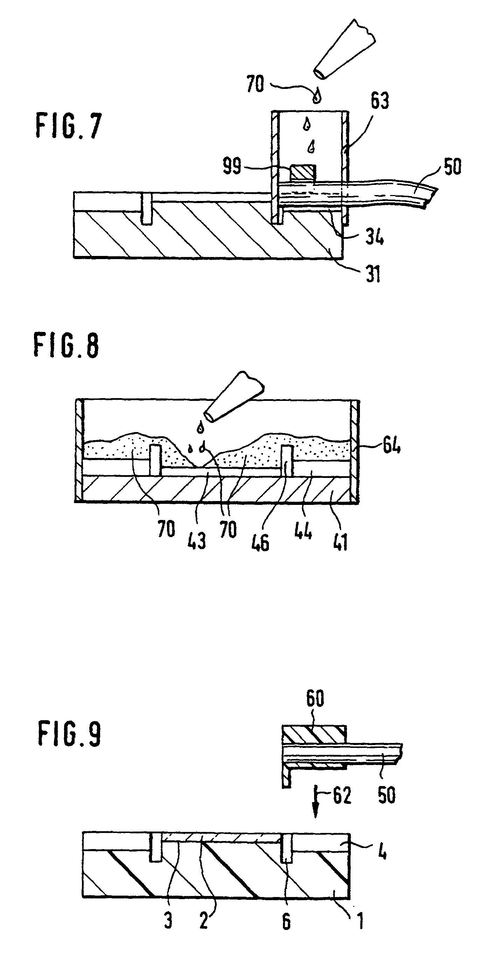

Die 1.-Generation-Tochter 21 wird wiederum in einem Elektrolyseprozeß mit einer Metallschicht beschichtet, welche wiederum bevorzugt aus Nickel besteht. Durch das Trennen der elektrolytischen Beschichtung von der 1.-Generation-Tochter 21 wird hierbei die 2.-Generation-Tochter 31 erzeugt. Die 1.-Generation-Tochter 21 geht bei der Entformung von 1.-Generation-Tochter 21 und 2.-Generation-Tochter 31 nicht verloren. Somit ist es möglich, mehrere 2.-Generation-Töchter 31 zu erzeugen. Das Zwischenprodukt nach diesem Verfahrensschritt ist in Figur 5 dargestellt.

Die 2.-Generation-Tochter 31 ist im wesentlichen ein genaues Abbild des Masters 11. Sie weist 2.-Enkel-Mikrostrukturen 33, 1.-Enkel-Mikrostrukturen 34 sowie 3.-Enkel-Mikrostrukturen 36 auf, welche den ersten Mikrostrukturen 14, den zweiten Mikrostrukturen 13 und den dritten Mikrostrukturen 16 entsprechen.

Im nächsten Verfahrensschritt entsteht durch abermaliges galvanisches Abformen einer 2.-Generation-Tochter 31 eine 3.-Generation-Tochter 41, wie sie in Figur 6 gezeigt ist. Die 3.-Generation-Tochter 41 ist im wesentlichen ein mikrogenaues Abbild der 1.-Generation-Tochter 21 und weist 1.-Urenkel-Mikrostrukturen 44, 2.-Urenkel-Mikrostrukturen 43 sowie 3.-Urenkel-Mikrostrukturen 46 auf, welchen den 2.-Tochter-Mikrostrukturen 23, 1.-Tochter-Mikrostrukturen 24 und 3.-Tochter-Mikrostrukturen 26 der 1.-Generation-Tochter 21 entsprechen.

In einem nächsten Verfahrensschritt wie er in Figur 7 gezeigt wird, wird aus einer 2.-Generation-Tochter 31 eine Steckverbindung hergestellt. Hierzu wird auf die 2.-Generation-Tochter 31 eine Formhilfe 63 in Form eines Rahmens aufgesetzt, welcher im hier gewählten Ausführungsbeispiel in etwa rechteckig ist und in seinem Inneren die 1.-Enkel-Mikrostruktur 34 sowie teilweise die 3.-Enkel-Mikrostruktur 36 umfaßt. In die 1.-Enkel-Mikrostruktur 34 wird eine Faser 50 eingelegt, welche sich wegen des V-förmigen Querschnitts der 1.-Enkel-Mikrostruktur 34 bei Andruck selbständig zentriert. Vorteilhafterweise wird auf die Faser ein kleiner Magnet 99 gelegt, der vom ferromagnetischen Nickel angezogen wird und so die Faser leicht in die als V-Nut ausgebildete 1.-Enkel-Mikrostruktur 34 drückt. Weiterhin weist die Formhilfe 63 in vorteilhafter Ausgestaltung eine Ausnehmung auf, aus welcher die Faser 50 herausgeführt werden kann. Es ist jedoch auch möglich, die Faser über die Formhilfe 63 hinweg oder unter ihr hindurchzuführen. Sodann wird das Innere der Formhilfe 63 mit einer Vergußmasse 70 befüllt, welche nach Befüllen der Formhilfe aushärtet. Die Faser wird hierbei Bestandteil des Gußkörpers. Um eine gute Verbindung zwischen dem Quarzglas der Faser und der Vergußmasse zu erreichen, ist es vorteilhaft, die Faser vorab mit einem Haftvermittler, beispielsweise Silan, zu versehen. Falls ein Magnet benutzt wurde, kann er auch Bestandteil des Gußkörpers werden. Das Aushärten kann beispielsweise durch Lichteinstrahlung oder Erwärmung geschehen, es sind jedoch auch andere Aushärtungsmechanismen vorstellbar. Auch die Einbettung der Faser in Spritzguß ist möglich.

Zur Erhöhung der optischen Qualität des Bauteils ist es vorteilhaft, die Faser 50 so tief in die 1.-Enkel-Mikrostruktur 34 hineinzuschieben, daß die Faser an der Innenseite der aus Formhilfe 63 und zweit-Generation-Tochter gebildeten Gußform anstößt, oder in anderer geeigneter Weise dafür zu Sorge zu tragen, daß die Faserenden nicht mit Vergußmasse 70 benetzt werden.

Die genaue Form der Formhilfe 63 soll nicht erfindungsrelevant sein, ebensowenig ihre Verwendung an sich. Die 2.-Enkel-Mikrostruktur 33 soll jedoch nicht mit Vergußmasse 70 gefüllt werden, da sonst die Paßgenauigkeit des Steckers nicht gewährleistet werden kann. Durch Verwendung einer aushärtbaren Vergußmasse von anfänglich wachsartiger Konsistenz ist es auch möglich, diese Anforderungen ohne Verwendung einer Formhilfe 63 zu erfüllen.

In einem weiteren Verfahrensschritt, welcher in Figur 8 dargestellt ist, wird das Substrat 1 hergestellt. Hierzu wird eine zweite Formhilfe 64, welche im hier gewählten Ausführungsbeispiel die Form eines Rähmchens hat, dessen Innenabmessungen genau den Außenabmessungen der 3.-Generation-Tochter entsprechen, mit einer 3.-Generation-Tochter 41 zu einer Gußform verbunden. Die so entstandene trogförmige Gußform wird wiederum mit einer Vergußmasse 70 befüllt, welche durch Temperatur, Lichteinwirkung, Bestrahlung oder andere dem Fachmann geläufige Methoden aushärtbar ist. Es ist vorteilhaft, die Vergußmasse 70 so zu wählen, daß die optischen Eigenschaften eine möglichst geringe Absorption aufweisen. Diese Anforderung ist darin begründet, daß der Abdruck der 2.-Urenkel-Mikrostruktur 43 in einem späteren Verfahrensschritt zu einem Wellenleiter ausgebildet werden soll. In diesem Fall bildet die Vergußmasse 70 die Umhüllung des Wellenleiters, dessen Dämpfung dann auch vom Absorptionskoeffizienten des Umhüllungsmaterials abhängt. Statt des Ausgießens mit der Vergußmasse sind auch andere Möglichkeiten der Kunststoffabformung möglich und vorgesehen, beispielsweise Heißpressen, wobei die 3.-Generation 41 als Formstempel dient, bzw. Reaktionsguß, Spritzguß. In Abhängigkeit von der Ausgestaltung des Kunststoffabgußverfahrens sind auch andere zweite Formhilfen denkbar und auch notwendig als die eines Rähmchens. Diese Ausgestaltungen sind dem Fachmann geläufig.

Weiterhin ist es möglich und vorgesehen, die zweite Formhilfe 64 als Gußrähmchen auszubilden, welches nach Entformen des Substrats von der 3.-Generation-Tochter zusammen mit der ausgehärteten Vergußmasse 70 das Substrat 1 bildet. In diesem Fall ist auch möglich und vorgesehen, daß die zweite Formhilfe 64 zusätzlich als Träger für optische oder optoelektronische oder elektrische Bauteile dient, welche dann mit in das Substrat vergossen werden. Ein solches Rähmchen ist beispielsweise aus der deutschen Patentanmeldung mit dem Aktenzeichen 196 42 088.1 bekannt.

In Figur 9 schließlich wird das integriert optische Wellenleiterbauteil mit der dazugehörigen Steckverbindung gezeigt. Das Wellenleiterbauteil umfaßt einerseits das durch den Verfahrensschritt in Figur 8 gezeigte Substrat 1, welches im wesentlichen aus einem quaderförmig geformten Polymerwerkstoff besteht, der ausgehärteten Vergußmasse. In zwei entgegengesetzten Seiten weist das Substrat 1 V-förmige Einkerbungen auf, welche ins Innere weisen, die V-Nuten 4, welche mikrogenau abgeformte Abbilder der ersten Mikrostruktur 14 des Masters 11 darstellen. Angrenzend an die V-Nuten 4 und in etwa senkrecht zu deren Längsachsen verlaufend, weist das Substrat 1 Vertiefungen mit rechteckigem Querschnitt 4 auf, welche durch Abformung der dritten Mikrostruktur 16 des Masters 11 erzeugt wurden, wobei die dritte Mikrostruktur durch Sägeschnitte erzeugt wurde. In etwa fluchtend mit den Längsachsen der V-Nuten 4 und diese verbindend weist das Substrat 1 eine Wellenleitervertiefung auf, welche die Form eines länglichen Grabens mit etwa rechteckigem Querschnitt aufweist. Die Wellenleitervertiefung 3 ist mit einem transparentem höherbrechenden Wellenleitermaterial 2 befüllt. Weiterhin weist das integriert optische Wellenleiterbauteil eine Steckverbindung 60 auf, die durch den in Figur 7 gezeigten Verfahrensschritt entstanden ist. Durch das Aufsetzen der Steckverbindung 60 auf das Substrat 1 in Aufsteckrichtung 62 ist eine leicht trennbare und dennoch sehr gut justierte Verbindung zwischen Substrat 1 und Faser 50 entstanden.

Die gute Paßgenauigkeit und sehr exakte Positionierung der Faser liegt darin begründet, daß Steckverbindung 60 und Substrat 1 beide durch Abformungen desselben Masters 11 erzeugt wurden.

Um diesen Vorteil zu erhalten, ist es nicht notwendig, auf eine 2.-Generation-Tochter und eine 3.-Generation-Tochter für die Kunststoffabformung zurückzugreifen. Es ist ebenso vorstellbar und vorgesehen, jede andere Kombination aus einer geradzahligen und einer ungeradzahligen Generation zu benutzen. Es ist jedoch zu berücksichtigen, daß die 1.-Generation-Tochter nur in einfacher Ausfertigung hergestellt werden kann, wogegen höhere Generationen in höherer Auflage hergestellt werden können. Weiterhin steigt die Möglichkeit für Ungenauigkeiten besonders bei Abformung von kleinsten Strukturen mit der Zahl der Generationen. Es erscheint somit vorteilhaft, eine Kombination aus geradzahliger Generation-Tochter und ungeradzahliger Generation-Tochter zu wählen, die zwei nahe beieinander liegende, nicht zu hohe, und von 1 verschiedene Zahlen aufweist. Vorteilhaft erscheint unter diesem Aspekt beispielsweise die Kombination 2.-Generation- und 3.-Generation-Tochter oder 3.-Generation- und 4.-Generation-Tochter.

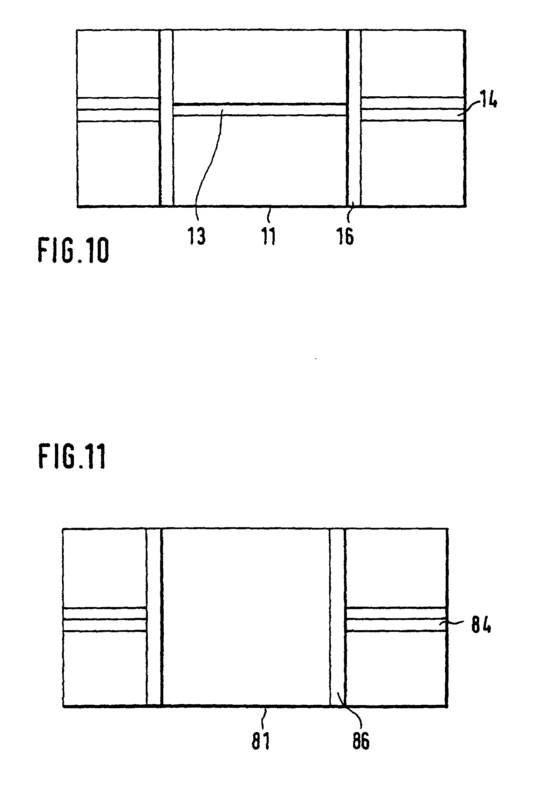

Ein zweites Ausführungsbeispiel soll anhand der Figuren 10 und 11 erläutert werden. Figur 10 zeigt das schon in Figur 3 dargestellte Master 11 in Aufsicht. An den äußeren gegenüberliegenden Enden des Masters 11 sind je eine erste Mikrostruktur 14 angebracht, welche in etwa die gleiche Form und Abmessung wie die V-Nuten 4 des Substrats 1 haben. Zwischen den beiden ersten Mikrostrukturen 14 verläuft eine zweite Mikrostruktur 13, welche in etwa die Form der Wellenleitervertiefung des Substrats 1 hat. Weiterhin ist eine dritte Mikrostruktur 16 vorgesehen, welche in etwa senkrecht zur Längsachse der zweiten Mikrostruktur 13 und der ersten Mikrostruktur 14. verläuft. Die dritte Mikrostruktur 16 ist so angeordnet, daß die zweite Mikrostruktur 13 und die erste Mikrostruktur 14 die dritte Mikrostruktur 16 berührt.

Figur 11 zeigt eine mit dem Master 11 verwandte Mikrostruktur, das Deckel-Master 81 in Aufsicht. An den äußeren gegenüberliegenden Enden des Masters 11 ist je eine erste Deckel-Mikrostruktur 84 angebracht, welche genau die gleiche Form und Abmessung wie die ersten Mikrostrukturen 14 des Masters 11 hat. Weiterhin ist eine dritte Deckel-Mikrostruktur 86 vorgesehen, welche genau die gleiche Form und Abmessung wie die dritten Mikrostrukturen 16 des Masters 11 hat.

Das Deckel-Master 81 kann aus Silizium in gleicher Weise wie das Master 11 hergestellt werden, wobei für die erste Deckel-Mikrostruktur 84 entweder die gleiche Maske wie für die erste Mikrostruktur 14 verwendet wurde oder eine exakte Kopie der Maske. Als alternative Herstellungsweise für das Deckel-Master bietet sich an eine geradzahlig-Generation-Tochter des Masters 11 heranzuziehen, und die zweiten Mikrostrukturen durch Auffüllen zu beseitigen.

Das Substrat wird in diesem Ausführungsbeispiel ebenso hergestellt wie im vorhergehenden, anhand der Figuren 3-9 beschriebenen.

Zur Herstellung der Steckverbindung wird jedoch anstelle der 2.-Generation-Tochter des Masters 11, wie zu Figur 7 beschrieben, eine geradzahlig-Generation-Tochter des Deckel-Masters 81 abgeformt. Da diese nicht über die zweiten Mikrostrukturen verfügt, sind größere Freiheiten bei der Gestaltung der Formhilfe möglich.

Das zweite Ausführungsbeispiel bietet darüber hinaus den Vorteil, daß die ungeradzahlig-Generation-Töchter des Deckel-Masters 81 als Deckel für das Substrat 1 dienen können. Beispielsweise kann dieser Deckel als Strip-off-Deckel dienen, um das Wellenleitermaterial 2 während des Aushärtens in die Wellenleitervertiefung 3 des Substrats zu pressen.

Bei beiden Ausführungsbeispielen ist es möglich und vorgesehen, die Abform- und/oder Aushärtetemperaturen für die beiden Abformprozesse unabhängig voneinander zu variieren. Somit kann die thermische Ausdehnung genutzt werden und es ist ein weiter Bereich von Passungen zwischen Substrat und Steckverbindung, von Preßpassung bis Schlackerpassung erreichbar.

Weitere Abwandlungen des Verfahrens ergeben sich durch die Möglichkeit, Bearbeitungsschritte, die in Silizium nur schwer möglich sind, wie beispielsweise spanabhebendes Bearbeiten, an einer der Nickel-Töchter vorzunehmen.

Durch des Einfbringen eines Magneten oder eines ferroagnetischen Werkstücks in das Substrat ist es möglich, zusammen mit einem in der Steckverbindung vorhandenen Magneten eine Arretierungsmöglichkeit zu schaffen. Hierzu ist es möglich aber nicht zwingend, den Magneten in der Steckverbindung heranzuziehen, der zur Fixierung der Faser beim Eingießen verwendet wurde.

Die hier gezeigten Ausführungsbeispiele befassen sich mit der Herstellung eines integriert-optischen Bauteils mit Steckverbindung. Es ist jedoch auch möglich und vorgesehen, das Verfahren zur Herstellung anderer Stecker mit mikrogenauer Passung heranzuziehen. Beispielsweise ist es auch möglich, elektrische Mikrostecker durch das hier gezeigte Verfahren herzustellen, indem anstelle des Wellenleitermaterials ein Metall in die Wellenleitervertiefung eingefüllt wird und die Faser durch einen elektrischen Leiter ersetzt wird. Eine andere Anwendungsmöglichkeit ist die Herstellung von steckbaren optischen Bauteilen. Anstelle der Faser kann das optoelektronische Bauteil beim Steckergußvorgang so justiert werden, daß es später beim Einstecken in das Substrat an den Wellenleiter ankoppelt.

Durch die Mikropassung lassen sich so erhöhte Steckerdichten im Vergleich konventionellen Steckern erreichen.

## Patentansprüche

1. Verfahren zur Herstellung eines integriert-optischen Bauelements mit einem Substrat und einer Steckverbindung für eine optische Faser
mit folgenden Verfahrensschritten:
a. Bereitstellung eines Masters (11) mit einer ersten Mikrostruktur (14) und einer zweiten Mikrostruktur (13)
b. Herstellung einer 1.-Generation-Tochter (21) durch Abformen, insbesondere durch Galvanik, des Masters,
c. Herstellung einer n.-Generation-Tochter durch Abformen, insbesondere durch Galvanik, der (n-1).-Generation-Tochter, wobei n wenigstens zwei beträgt und der Schritt c.(n-1) Male durchlaufen wird,
d. Herstellung eines Substrats (1) durch Kunststoffabformen, insbesondere durch Heisspressen, Spritzgießen, oder Reaktionsgießen, einer i.-Generation-Tochter, wobei i ungeradzahlig und kleiner als oder gleich n ist, wodurch die Mikrostuktur (14) zu einer V-Nut (4) abgeformt wird und die zweite Mikrostruktur (13) zu einer Wellenleitervertiefung (3) abgeformt wird,
e. Herstellung einer Steckverbindung (60) durch Kunststoffabformen, insbesondere durch Heisspressen, Spritzgießen, oder Reaktionsgießen, desjenigen Teils der j-Generation-Tochter, der die j-fach abgeformte erste Mikrostruktur (14) beinhaltet, wobei j geradzahlig und kleiner als oder gleich n ist, wobei vor der Kunststoffabformung eine optische Faser (50) in die j-fach abgeformte erste Mikrostuktur eingelegt wird,
f. Befüllen der Wellenleitervertiefung (3) mit einem aushärtbaren transparenten Material (2),
g. Aushärten des aushärtbaren transparenten Materials.

2. Verfahren zur Herstellung eines integriert-optischen Bauelements mit einem Substrat und einer Steckverbindung für eine optische Faser
mit folgenden Verfahrensschritten:
a. Bereitstellung eines Masters (11) mit einer ersten Mikrostruktur (14) und einer zweiten Mikrostruktur (13)
b. Herstellung einer 1.-Generation-Tochter (21) durch Abformen, insbesondere durch Galvanik, des Masters,
c. Herstellung einer n.-Generation-Tochter durch Abformen, insbesondere durch Galvanik, der (n-1).-Generation-Tochter, wobei n wenigstens zwei beträgt und der Schritt c.(n-1) Male durchlaufen wird,
d. Herstellung eines Substrats (1) durch Kunststoffabformen, insbesondere durch Heisspressen, Spritzgießen, oder Reaktionsgießen, einer i.-Generation-Tochter, wobei i ungeradzahlig und kleiner als oder gleich n ist, wodurch die erste Mikrostruktur (14) zu einer V-Nut (4) abgeformt wird und die zweite Mikrostruktur (13) zu einer Wellenleitervertiefung (3) abgeformt wird,
e. Bereitstellung eines Deckel-Masters (81) mit einer ersten Deckel-Mikrostruktur (84), die in Anordnung, Form und Größe der ersten Mikrostruktur (13) des Masters (11) gleicht,
f. Herstellung eines 1.-Generation-Tochter-Deckels durch Abformen, insbesondere durch Galvanik, des Deckel-Masters (81),
g. Herstellung eines m.-Generation-Tochter-Deckels durch Abformen, insbesondere durch Galvanik, des (m-1).-Generation-Tochter-Deckels, wobei m wenigstens zwei beträgt und der Schritt g.(m-1) Male durchlaufen wird,
h. Herstellung einer Steckverbindung (60) durch Kunststoffabformen, insbesondere durch Heisspressen, Spritzgießen, oder Reaktionsgießen, desjenigen Teils des j-Generation-Tochter-Deckels, der die j-fach abgeformte erste Deckel-Mikrostruktur (84) beinhaltet, wobei j geradzahlig und kleiner als oder gleich m ist, wobei vor der Kunststoffabformung eine optische Faser (50) in die j-fach abgeformte ersten Deckel-Mikrostruktur (84) eingelegt wird,
i. Befüllen der Wellenleiterstruktur (3) mit einem aushärtbaren transparenten Material (2),
j. Aushärten des aushärtbaren transparenten Materials.

3. Verfahren nach einem der vorhergehenden Ansprüche, **dadurch gekennzeichnet, daß** im Master oder in der zweit-Generation-Tochter weitere Mikrostrukturen (6) vorgesehen werden.

4. Verfahren nach Anspruch 2, **dadurch gekennzeichnet, daß** im Master weitere Mikrostrukturen (6) vorgesehen werden, daß im Deckel-Master weitere Deckel-Mikrostrukturen (86) vorgesehen werden, wobei die weiteren Mikrostrukturen (6) des Masters (11) den weiteren Deckel-Mikrostrukturen (86) des Deckel-Masters (81) in Anordnung, Form und Größe gleichen.

5. Verfahren nach Anspruch 2 oder 4, **dadurch gekennzeichnet, daß** zwischen den Schritten i. und j. ein k.-Generation-Tochter-Deckel auf das Substrat (2) gelegt wird, wobei k ungeradzahlig, größer als oder gleich eins und kleiner als oder gleich m ist.

6. Verfahren nach einem der vorhergehenden Ansprüche, **dadurch gekennzeichnet, daß** n=3.

7. Verfahren nach einem der vorhergehenden Ansprüche, **dadurch gekennzeichnet, daß** j=i+1.

8. Verfahren nach einem der vorhergehenden Ansprüche, **dadurch gekennzeichnet, daß** vor dem Kunststoffabformen kleine Magnete und /oder ferromagnetische Körper auf die i.-und/oder j.-Generation-Töchter gelegt werden, so daß das Substrat und/oder die Steckverbindung mit einem Magnet oder Ferromagnet versehen werden, die durch wechselseitige Anziehung das Substrat und die Steckverbindung zusammenführen.

9. Verfahren zur Herstellung eines ersten und eines zweiten mikrostrukturierten Körpers, wobei der erste mikrostrukturierte Körper mit dem zweiten mikrostrukturierten Körper in eine rastende und zerstörungsfrei wieder trennbare Verbindung gebracht werden kann, wobei der erste und der zweite mikrostrukturierte Körper durch die Verbindung relativ zueinander positioniert werden, und wobei wenigstens einer der mikrostrukturierten Körper mit einem Leiter, insbesondere für Licht oder Elektrizität, verbunden ist, **dadurch gekennzeichnet,**
**daß** ein mikrostrukturiertes Master bereitgestellt wird, daß das Master wenigstens zwei aufeinanderfolgende Male galvanisch abgeformt wird, so daß eine erste und eine zweite Generation-Tochter entsteht,
**daß** durch wenigstens bereichsweise Kunststoffabformung einer geradzahlig-Generation-Tochter ein erster mikrostrukturierter Körper erzeugt wird,
**daß** durch wenigstens bereichsweise Abformung einer ungeradzahlig-Generation-Tochter ein zweiter mikrostrukturierter Körper erzeugt wird,
**daß** bei einem der Kunststoffabformschritte der Leiter auf die abzuformende Tochter aufgelegt wird und Bestandteil des mikrostrukturierten Körpers wird,
**daß** die abzuformenden Bereiche für den ersten und den zweiten mikrostrukturierten Körper so gewählt werden, daß Teile des Masters sowohl in den ersten als auch in den zweiten mikrostrukturierten Körper abgeformt werden und durch die Teile die rastende Verbindung geschaffen wird.

10. Verfahren zur Herstellung eines ersten und eines zweiten mikrostrukturierten Körpers, wobei der erste mikrostrukturierte Körper mit dem zweiten mikrostrukturierten Körper in eine rastende und zerstörungsfrei wieder trennbare Verbindung gebracht werden kann, wobei der erste und der zweite mikrostrukturierte Körper durch die Verbindung relativ zueinander positioniert werden, und wobei wenigstens einer der mikrostrukturierten Körper mit einem Leiter, insbesondere für Licht oder Elektrizität, verbunden ist, **dadurch gekennzeichnet,**
**daß** ein erstes mikrostrukturiertes Master bereitgestellt wird, daß das erste Master wenigstens ein Mal galvanisch abgeformt wird, so daß eine erste Generation-Tochter des ersten Masters entsteht,
**daß** ein zweites mikrostrukturiertes Master bereitgestellt wird, wobei das erste und das zweite Master in einem vorgegeben Bereich identische Strukturen aufweisen, vorzugsweise dadurch, daß die Master durch Ätztechnik mit bereichsweise identischen Masken hergestellt wurden,
**daß** das zweite Master wenigstens zwei aufeinanderfolgende Male galvanisch abgeformt wird, so daß eine erste und eine zweite Generation-Tochter des zweiten Masters entsteht,
**daß** durch wenigstens bereichsweise Kunststoffabformung einer geradzahlig-Generation-Tochter des ersten oder des zweiten Masters ein erster mikrostrukturierter Körper erzeugt wird,
**daß** durch wenigstens bereichsweise Abformung einer ungeradzahlig-Generation-Tochter desjenigen Masters, dessen ungeradzahlig-Generation-Tochter nicht zur Herstellung des ersten mikrostrukturierten Körpers herangezogen wurde, ein zweiter mikrostrukturierter Körper erzeugt wird,
**daß** bei einem der Kunststoffabformschritte der Leiter auf die abzuformende Tochter aufgelegt wird und Teil des mikrostrukturierten Körpers wird,
**daß** die abzuformenden Bereiche für den ersten und den zweiten mikrostrukturierten Körper so gewählt werden, daß der vorgegebene Bereich sowohl in den ersten als auch in den zweiten mikrostrukturierten Körper übertragen werden und durch den vorgegebenen Bereich die rastende Verbindung geschaffen wird.

11. Verfahren nach einem der Ansprüche 9 oder 10, **dadurch gekennzeichnet, daß** anstelle des Leiters ein optoelektonisches Bauelement beliebiger Bauart in den zweiten mikrostrukturierten Körper eingebracht wird.

12. Verfahren nach einem der vorhergehenden Ansprüche, **dadurch gekennzeichnet, daß** die Kunststoffabformschritte bei unterschiedlichen Temperaturen vorgenommen werden.

13. Verfahren nach einem der vorhergehenden Ansprüche, **dadurch gekennzeichnet, daß** das Aushärten der beiden abgeformten Kunststoffbauteile bei unterschiedlichen Temperaturen vorgenommen wird.

## Claims

1. A method of fabricating an integrated optical component including a substrate and a connector for an optical fiber
comprising the following method steps:
a. providing a master (11) having a first microstructure (14) and a second microstructure (13),
b. fabricating a ^{1st} generation daughter (21) by formation, more particularly by electroplating, of said master,
c. fabricating an n^{th} generation daughter by formation, more particularly by electroplating, of the (n-1)^{th} generation daughter, where n is at least two and step c is sequenced (n-1) times,
d. fabricating a substrate (1) by plastics formation, more particularly by hot pressing, injection molding or reaction injection molding, of an i^{th} generation daughter, where i is an uneven number and smaller than or equal to n, resulting in said microstructure (14) being formed into a V-shaped groove (4) and said second microstructure (13) being formed into a waveguide recess (3),
e. fabricating a connector (60) by plastics formation, more particularly by hot pressing, injection molding or reaction injection molding, of that part of the j^{th} generation daughter containing the first microstructure (14) formed j times, where j is an even number and smaller than or equal to n, wherein prior to said plastics formation an optical fiber (50) is placed into said first microstructure formed j times,
f. filling said waveguide recess (3) with a curable transparent material (2),
g. curing said curable transparent material.

2. A method of fabricating an integrated optical component including a substrate and a connector for an optical fiber
comprising the following method steps:
a. providing a master (11) having a first microstructure (14) and a second microstructure (13),
b. fabricating a ^{1st} generation daughter (21) by formation, more particularly by electroplating, of said master,
c. fabricating an n^{th} generation daughter by formation, more particularly by electroplating, of the (n-1)^{th} generation daughter, where n is at least two and step c is sequenced (n-1) times,
d. fabricating a substrate (1) by plastics formation, more particularly by hot pressing, injection molding or reaction injection molding, of an i^{th} generation daughter, where i is an uneven number and smaller than or equal to n, resulting in said first microstructure (14) being formed into a V-shaped groove (4) and said second microstructure (13) being formed into a waveguide recess (3),
e. providing a cover master (81) including a first cover microstructure (84) having the same arrangement, shape and size as said first microstructure (14) of said master (11),
f. fabricating a ^{1st} generation daughter cover by formation, more particularly by electroplating, of said cover master (81),
g. fabricating an m^{th} generation daughter cover by formation, more particularly by electroplating, of the (m-1)^{th} generation daughter cover, where m is at least two and step g is sequenced (m-1) times,
h. fabricating a connector (60) by plastics formation, more particularly by hot pressing, injection molding or reaction injection molding, of that part of the j^{th} generation daughter cover containing the first cover microstructure (84) formed j times, where j is an even number and smaller than or equal to m, wherein prior to said plastics formation an optical fiber (50) is placed into said first cover microstructure (84) formed j times,
i. filling said waveguide structure (3) with a curable transparent material (2),
j. curing said curable transparent material.

3. The method of either of the preceding claims, **characterized in that** additional microstructures (6) are provided in said master or in the ^{2nd} generation daughter.

4. The method of claim 2, **characterized in that** additional microstructures (6) are provided in said master, additional cover microstructures (86) are provided in said cover master, said additional microstructures (6) of said master (11) being the same in arrangement, shape and size as said additional cover microstructures (86) of said cover master (81).

5. The method of claim 2 or 4, **characterized in that** between the steps i and j, a k^{th} generation daughter cover is placed on said substrate (2), where k is an uneven number, larger than or equal to one and smaller than or equal to m.

6. The method of any of the preceding claims, **characterized in that** n = 3.

7. The method of any of the preceding claims, **characterized in that** j = i + 1.

8. The method of any of the preceding claims, **characterized in that** prior to plastics formation, miniature magnets and/or ferromagnetic bodies are placed on said i^{th} and/or j^{th} generation daughters so that said substrate and/or said connector is provided with a magnet or ferromagnet which draws substrate and connector together by mutual attraction.

9. A method of fabricating a first and a second microstructured body, said first microstructured body being connectable with said second microstructured body latchingly and so as to be released again non-destructively, said first and second microstructured bodies being positioned by the connection relative to each other, and at least one of said microstructured bodies being connected to a conductor, more particularly for light or electricity, **characterized by**
providing a microstructured master,
forming said master at least two times in sequence by electroplating to produce a ^{1st} and a ^{2nd} generation daughter,
fabricating a first microstructured body by plastics formation at least in part of an even number generation daughter,
fabricating a second microstructured body by formation at least in part of an uneven number generation daughter,
placing, in one of said plastics formation steps, said conductor on said daughter to be formed, said conductor becoming a component of said microstructured body,
selecting the portions to be formed for said first and second microstructured bodies such that parts of said master are formed into both said first and second microstructured bodies and said latching connection is created by said parts.

10. A method of fabricating a first and a second microstructured body, said first microstructured body being connectable with said second microstructured body latchingly and so as to be released again non-destructively, said first and second microstructured bodies being positioned by said connection relative to each other, and at least one of said microstructured bodies being connected to a conductor, more particularly for light or electricity, **characterized by**
providing a first microstructured master,
forming said first master at least once by electroplating to produce a 1st generation daughter of said first master,
providing a second microstructured master, said first and second masters comprising identical structures in a defined portion, preferably due to said masters having been fabricated by etching with masks identical in part,
forming said second master at least twice in sequence by electroplating to produce a ^{1st} and a ^{2nd} generation daughter of said second master,
fabricating a first microstructured body by plastics formation at least in part of an even number generation daughter of said first or second master,
fabricating a second microstructured body by formation at least in part of an uneven number generation daughter of that master whose uneven number generation daughter was not used in fabricating said first microstructured body,
placing, in one of said plastics formation steps, said conductor on said daughter to be formed, said conductor becoming a component of said microstructured body,
selecting the portions to be formed for said first and second microstructured bodies such that said defined portion is transferred to both said first and second microstructured bodies and said latching connection is created by said defined portion.

11. The method of claim 9 or claim 10, **characterized in that** instead of said conductor an optoelectronic component of any type is incorporated in said second microstructured body.

12. The method of any of the preceding claims, **characterized in that** said plastics formation steps are implemented at differing temperatures.

13. The method of any of the preceding claims, **characterized in that** curing of said two formed plastics components is implemented at differing temperatures.

## Revendications

1. Procédé de production d'un composant optique intégré comportant un substrat et un connecteur enfichable pour une fibre optique, présentant les étapes de procédé suivantes :
a. Fourniture d'une matrice (11) avec une première microstructure (14) et une deuxième microstructure (13),
b. production d'une fille de première génération (21) par formage, en particulier galvanique, de la matrice,
c. production d'une fille de n-ième génération par formage, en particulier galvanique, de la fille de (n-1)-ième génération, n étant au moins deux, et l'étape c. étant exécutée (n-1) fois,
d. production d'un substrat (1) par formage plastique, en particulier par pressage à chaud, par moulage par injection ou par moulage réactionnel d'une fille de la i-ième génération, i étant impair et inférieur ou égal à n, grâce à quoi la microstructure (14) est formée pour obtenir une gorge en V (4) et la deuxième microstructure est formée pour obtenir un renfoncement pour guide d'ondes (3),
e. production d'un connecteur enfichable par formage plastique, en particulier par pressage à chaud, par moulage par injection ou par moulage réactionnel de la partie de la fille de la j-ième génération qui contient la première microstructure (14) j-fois moulée, j étant pair et inférieur ou égal à n, une fibre optique (50) étant placée, avant le formage plastique, dans la première microstructure moulée j-fois,
f. remplissage du renfoncement (3) de guide d'ondes avec un matériau (2) transparent durcissable,
g. durcissement du matériau (2) transparent durcissable.

2. Procédé de production d'un composant optique intégré comportant un substrat et un connecteur enfichable pour une fibre optique, présentant les étapes de procédé suivantes :
a. Fourniture d'une matrice (11) avec une première microstructure (14) et une deuxième microstructure (13),
b. production d'une fille de première génération (21) par formage, en particulier galvanique, de la matrice,
c. production d'une fille de n-ième génération par formage, en particulier galvanique, de la fille de (n-1)-ième génération, n étant au moins deux, et l'étape c. étant exécutée (n-1) fois,
d. production d'un substrat (1) par formage plastique, en particulier par pressage à chaud, par moulage par injection ou par moulage réactionnel d'une fille de la i-ième génération, i étant impair et inférieur ou égal à n, grâce à quoi la microstructure (14) est formée pour obtenir une gorge en V (4) et la deuxième microstructure est formée pour obtenir un renfoncement de guide d'ondes (3),
e. fourniture d'une matrice de couvercle (81) avec une première microstructure de couvercle (84) dont l'agencement, la forme et la taille ressemblent à ceux de la première microstructure (13) de la matrice (11).
f. production d'un couvercle de fille de première génération par formage, en particulier galvanique, de la matrice de couvercle (81),
g. production d'un couvercle de fille de m-ième génération par formage, en particulier galvanique, du couvercle de fille de (m-1)ième génération, m étant au moins deux, et l'étape g. étant exécutée (m-1) fois,
h. production d'une connexion enfichable (60) par formage plastique, en particulier par pressage à chaud, par moulage par injection ou par moulage réactionnel de la partie du couvercle de fille de la j-ième génération qui contient la première microstructure de couvercle (84) moulée j fois, j étant pair et inférieur ou égal à m, une fibre optique (50) étant placée, avant le formage plastique, dans la première microstructure de couvercle (84) moulée j-fois,
i. remplissage de la structure de guide d'ondes (3) avec un matériau (2) transparent durcissable,
j. durcissement du matériau transparent durcissable.

3. Procédé selon l'une des revendications précédentes, **caractérisé en ce que** d'autres microstructures (6) sont prévues dans la matrice ou dans la fille de deuxième génération.

4. Procédé selon la revendication 2, **caractérisé en ce que** d'autres microstructures (6) sont prévues dans la matrice, **en ce que** d'autres microstructures de couvercle (86) sont prévues dans la matrice de couvercle, l'agencement, la forme et la taille des autres microstructures (6) de la matrice (11) ressemblant à ceux des autres microstructures de couvercle (86) de la matrice de couvercle (81).

5. Procédé selon la revendication 2 ou 4, **caractérisé en ce qu'**entre les étapes i. et j., un couvercle de fille de la k-ième génération est posé sur le substrat (2), k étant impair, supérieur ou égal à un et inférieur ou égal à m.

6. Procédé selon l'une quelconque des revendications précédentes, **caractérisé en ce que** n = 3.

7. Procédé selon l'une quelconque des revendications précédentes, **caractérisé en ce que** j = i+1.

8. Procédé selon l'une quelconque des revendications précédentes, **caractérisé en ce qu'**avant le formage plastique, on pose des petits aimants et/ou des corps ferromagnétiques sur les filles de la i-ème génération et/ou de la j-ième génération, de sorte que le substrat et/ou la connexion enfichable sont pourvus d'un aimant ou d'un aimant ferromagnétique qui par l'attraction réciproque, réunissent le substrat et la connexion enfichable

9. Procédé de production de premier et second corps microstructurés, le premier corps microstructuré pouvant être amené dans une liaison par encliquetage qui peut être de nouveau séparée sans destruction, avec le deuxième corps microstructuré, les premier et deuxième corps microstructurés étant positionnés l'un par rapport à l'autre par la liaison et au moins un des corps microstructurés étant relié avec un guide, en particulier pour la lumière ou l'électricité, **caractérisé en ce que**
on fournit une matrice microstructurée, la matrice est formée par galvanisation au moins deux fois successives, de sorte qu'il est produit une fille de première et de deuxième génération,
par formage plastique, au moins partiellement, d'une fille de génération paire, on engendre un premier corps microstructuré,
par formage plastique, au moins partiellement, d'une fille de génération impaire, on engendre un deuxième corps microstructuré,
dans une des étapes de formage plastique, le guide est posé sur la fille à former et devient partie constitutive du corps microstructuré,
les régions à former pour les premier et deuxième corps microstructurés sont choisies telles que des parties de la matrice sont formées non seulement dans le premier mais aussi dans le deuxième corps microstructuré et que par lesdites parties est réalisée la liaison par encliquetage.

10. Procédé de production de premier et deuxième corps microstructurés, le premier corps microstructuré pouvant être amené avec le deuxième corps microstructuré dans une liaison par encliquetage qui peut de nouveau être séparée sans destruction, les premier et deuxième corps microstructurés étant positionnés l'un par rapport à l'autre par la liaison, et au moins un des corps microstructurés étant relié à un guide, en particulier pour la lumière ou l'électricité, **caractérisé en ce que**
on fournit une première matrice microstructurée, la première matrice est formée au moins une fois par galvanisation de sorte qu'il est produit une fille de première génération de la première matrice,
on fournit une deuxième matrice microstructurée, les première et deuxième matrices présentant des structures identiques dans une région déterminée, de préférence par le fait que les matrice ont été réalisées par les techniques de gravure avec des masques identiques par régions,
la deuxième matrice est formée par galvanisation au moins deux fois successives de sorte qu'il est produit des filles de première et de deuxième génération de la deuxième matrice,
par un formage plastique, au moins partiellement, d'une fille de génération paire des première ou deuxième matrices, il est produit un premier corps microstructuré,
par un formage plastique, au moins partiellement, d'une fille de génération impaire de la matrice dont la fille de génération impaire n'est pas utilisée pour produire le premier corps microstructuré, il est produit un premier corps microstructuré,
lors d'une des étapes de formage plastique, le guide est posé sur la fille à former et devient partie constitutive du corps microstructuré,
les régions à former pour les premier et deuxième corps microstructurés sont choisies telles que la région prédéterminée est transmise non seulement dans le premier mais aussi dans le deuxième corps microstructuré et que par la région prédéterminée est réalisée la liaison par encliquetage.

11. Procédé selon l'une ou l'autre des revendications 9 et 10, **caractérisé en ce qu'**à la place du guide, on introduit dans le deuxième corps microstructuré un composant optoélectronique de type quelconque.

12. Procédé selon l'une quelconque des revendications précédentes, **caractérisé en ce que** les étapes de formage plastique sont exécutées à différentes températures.

13. Procédé selon l'une quelconque des revendications précédentes, **caractérisé en ce que** le durcissement des deux composants de matière plastique formés est effectué à différentes températures.
